# EUROPÄISCHE PATENTANMELDUNG

(11) **EP 0 668 310 A1**
(43) Veröffentlichungstag der Anmeldung: **23.08.1995**
(21) Anmeldenummer: 95101600.5
(22) Anmeldetag: 07.02.1995
(51) Int. Cl.: C08G 73/10

(54) **Polyimide auf der Basis von Diaminen mit cycloaliphatischen Einheiten**

(30) Priorität: 16.02.1994 DE 4404891
(71) Anmelder: BASF AKTIENGESELLSCHAFT, D-67056 Ludwigshafen (DE)
(72) Erfinder: Fischer, Christian, Dr., D-67065 Ludwigshafen (DE); Elbl-Weiser, Karin, Dr., D-69198 Schriesheim (DE); Koch, Jürgen, Dr., D-67141 Neuhofen (DE)

(57) **Zusammenfassung**

Polyimide erhältlich durch Umsetzen einer Dianhydridkomponente mit einer Diaminkomponente, wobei mindestens ein Diamin cycloaliphatische Einheiten enthält, mit der Maßgabe, daß die Dianhydridkomponente eine Mischung unterschiedlicher Dianhydride ist, wenn die Diaminkomponente nur aus einem Diamin mit cycloaliphatischen Einheiten besteht und die Diaminkomponente eine Mischung unterschiedlicher Diamine ist, wenn die Dianhydridkomponente nur aus einem Dianhydrid besteht.

## Beschreibung

Die vorliegende Erfindung betrifft Polyimide, die durch Umsetzen
A) einer Dianhydridkomponente aus
   aᵢ) 50 bis 100 Mol-% mindestens eines Dianhydrids der allgemeinen Formel I 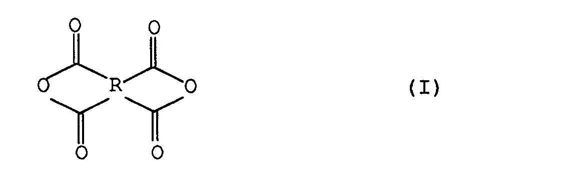 worin R ein tetravalenter aromatischer oder heteroaromatischer Rest, ausgenommen 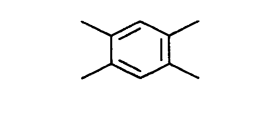 ist und
   a₂) 0 bis 50 Mol-% Pyromellitsäuredianhydrid, mit
B) einer Diaminkomponente aus
   b₁) 50 bis 100 Mol-% mindestens eines Diamins der allgemeinen Formel II 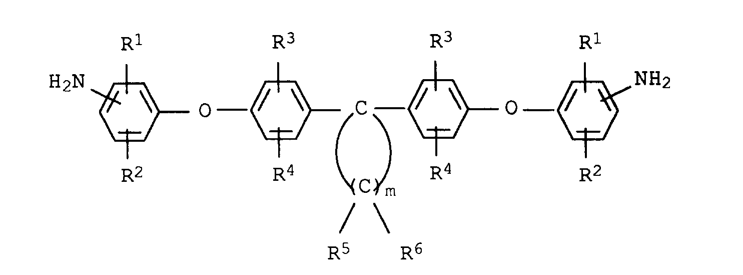 worin R¹ bis R⁴ unabhängig voneinander gleich oder verschieden sind und Wasserstoff, Halogen, C₁- bis C₁₂-Alkyl, Ci- bis C₁₂-Alkoxy, Cs- bis C₇-Cycloalkyl, C₆- bis C₁₈-Aryl, C₄- bis Cs-Heteroaryl oder Ci- bis C₁₂-Alkyl-C₆- bis C₁₈-Aryl bedeuten, R⁵ und R⁶ unabhängig voneinander gleich oder verschieden und für jedes C-Atom im alicyclischen Ring individuell wählbar sind Wasserstoff, C₁- bis C₁₂-Alkyl, C₁- bis C₁₂-Alkoxy, Cs- bis C₇-Cycloalkyl, C₆- bis C₁₈- Aryl, C₄- bis C₅-Heteroaryl oder C₁- bis C₁₂-Alkyl-C₆- bis C₁₈-Aryl bedeuten, m eine ganze Zahl von 4 bis 7 bedeutet,
   b₂) 0 bis 50 Mol-% mindestens eines Diamins der allgemeinen Formel III 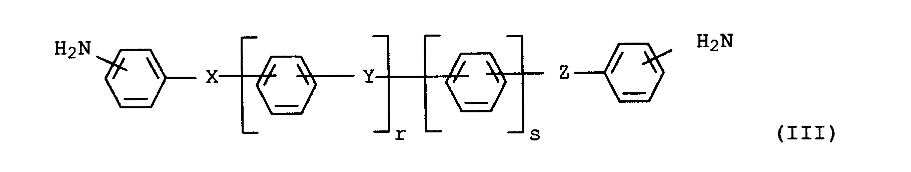 worin X, Y und Z unabhängig voneinander gleich oder verschieden sind und eine chemische Bindung bedeuten oder ausgewählt sind aus der Gruppe -O-, -CO-, -S-, S0₂-, -C(CH₃)₂-, -C(CF₃)₂- und -Si-(CH₃)₂- und r und s unabhängig voneinander gleich oder verschieden sind und den Wert 0 oder 1 annehmen,

mit der Maßgabe, daß die Komponente A eine Mischung aus a₁ und a₂ ist, wenn die Komponente B nur aus b₁ besteht und die Komponente B eine Mischung aus b₁ und b₂ ist, wenn die Komponente A nur aus a₁ besteht, erhältlich sind. Ferner betrifft die vorliegende Erfindung die Verwendung dieser Polyimide, Polyimide auf der Basis von Dianhydriden a₁ oder a₂ und Diaminen bᵢ waren aus der EP-A1-389 092 bekannt. Derartige Polyimide werden für die Herstellung von Flüssigkristallanzeigen eingesetzt, da sie die Ausrichtung der Flüssigkristalle unterstützen. Spezielle Diamine mit cycloaliphatischen Ringen zur Herstellung von Polyimiden für den gleichen Anwendungszweck sind den EP-A 368 604 und 439 362 zu entnehmen. Weitere Diamine der allgemeinen Formel II sind für die Herstellung von Kunststoffen oder Kunststoffmischungen in der EP-A2-379 006 beschrieben.

Aufgabe der vorliegenden Erfindung war es, neue Polyimide auf der Basis der Diamine der allgemeinen Formel II zur Verfügung zu stellen, die thermoplastisch verarbeitbar sind, jedoch eine höhere Schmelzestabilität aufweisen und eine bessere Wärmeformbeständigkeit zeigen als die bekannten Polyimide.

Die Aufgabe wird durch die eingangs definierten Polyimide gelöst. Die erfindungsgemäßen Polyimide sind durch Umsetzen einer Dianhydridkomponente A mit einer Diaminkomponente B erhältlich.

Die Dianhydridkomponente A setzt sich erfindungsgemäß aus 50 bis 100 Mol-% mindestens eines Dianhydrids a₁ und 0 bis 50 Mol-% Pyromellitsäuredianhydrid (a₂) zusammen. Bevorzugt wird als Dianhydridkomponente A 50 bis 99 Mol-% a₁ und 1 bis 50 Mol-% a₂ eingesetzt. Besonders bevorzugt wird als Dianhydridkomponente A 65 bis 99 Mol-%, insbesondere 65 bis 97 Mol-% a₁ und entsprechend 1 bis 35 Mol-%, insbesondere 3 bis 35 Mol-% Pyromellitsäuredianhydrid verwendet. Ganz besonders bevorzugt werden Mischungen aus 70 bis 95 Mol-% a₁ und 5 bis 30 Mol-% a₂ als Dianhydridkomponente A eingesetzt.

Erfindungsgemäß haben die Dianhydride a₁ die allgemeine Formel I 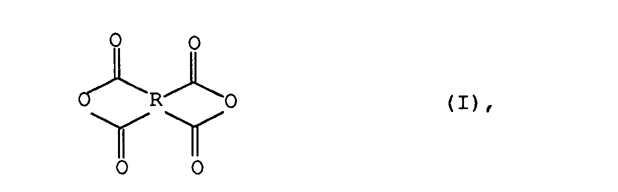 wobei a₁ Pyromellitsäuredianhydrid nicht mit umfaßt. Zu den bevorzugten Resten R zählen die Reste der Strukturen 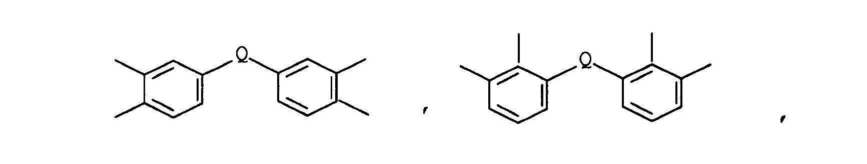 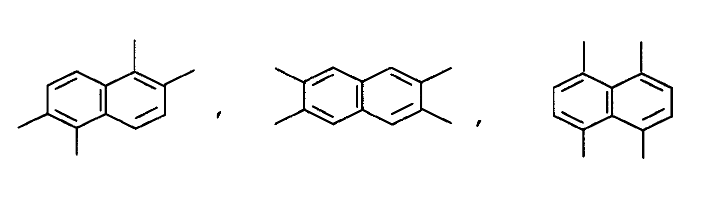 und

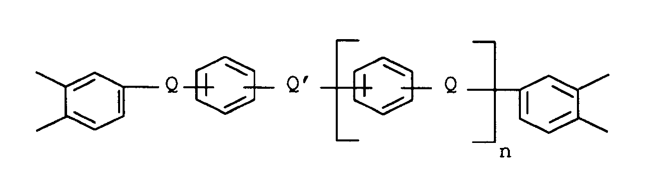

Dabei können Q und Q' unabhängig voneinander gleich oder verschieden sein. Sie können eine chemische Bindung darstellen. Ebenso können sie einen Rest ausgewählt aus der Gruppe -O-, -CO-, -S-, -S0₂-, -C-(CH₃)₂-, -C(CF₃)₂- und -Si(CH₃)₂- bedeuten. Bevorzugt stellen Q und Q' eine chemische Bindung, -O-, -S0₂- oder -C(CH₃)₂-dar. Die Variable n kann den Wert Null oder 1 annehmen. Ganz besonders bevorzugtes Dianhydrid a₁ ist 4,4'-Oxydiphthalsäureanhydrid:

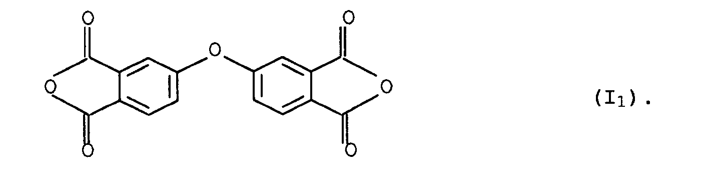

Es können auch Mischungen unterschiedlicher Dianhydride a₁ verwendet werden. Beispiele geeigneter Mischungen sind: 4,4'-Oxydiphthalsäuredianhydrid mit Biphenyltetracarbonsäuredianhydrid oder 4,4'-Oxydiphthalsäuredianhydrid mit Benzophenontetracarbonsäuredianhydrid oder ternäre Mischungen aus 4,4'-Oxydiphthalsäuredianhydrid, Biphenyltetracarbonsäuredianhydrid und Benzophenontetracarbonsäuredianhydrid.

Als Dianhydrid a₂ wird erfindungsgemäß Pyromellitsäuredianhydrid 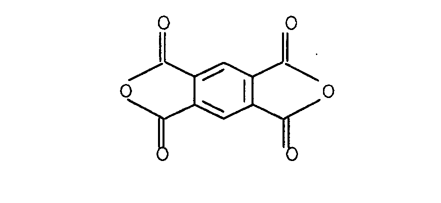 verwendet.

Erfindungsgemäß besteht die Diaminkomponente B aus 50 bis 100 Mol-% mindestens eines Diamins b₁ und 0 bis 50 Mol-% mindestens eines Diamins b₂. Bevorzugt werden Mischungen aus 50 bis 99 Mol-% b₁ und 1 bis 50 Mol-% b₂ eingesetzt. Besonders bevorzugt werden Diaminkomponenten aus 65 bis 99 Mol- %, insbesondere 65 bis 97 Mol-% bi und entsprechend 1 bis 35 Mol-%, insbesondere 3 bis 35 Mol-% b₂. Ganz besonders bevorzugt werden Diaminkomponenten B aus 70 bis 95 Mol-% b₁ und 5 bis 35 Mol-% b₂.

Die Diamine b₁ haben die allgemeine Formel II 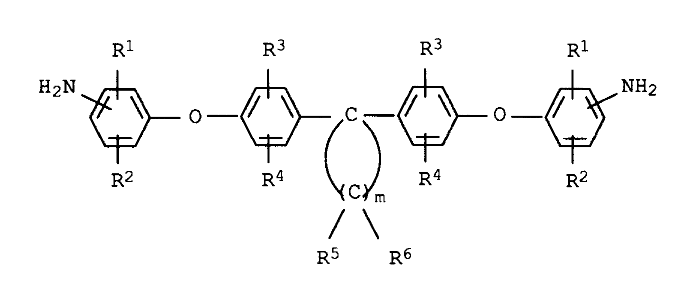 Darin können die Reste R¹ bis R⁴ unabhängig voneinander gleich oder verschieden sein. Sie können Wasserstoff bedeuten oder auch Halogen, bevorzugt Chlor. R¹ bis R⁴ können daneben jeweils einen C₁- bis C₁₂-Alkylrest bedeuten. Dieser kann sowohl linear als auch verzweigt sein. Als Beispiele seien Methyl, Ethyl, n-Propyl, i-Propyl, n-Butyl, i-Butyl, t-Butyl, n-Decyl oder n-Dodecyl genannt. Als Reste R¹ bis R⁴ kommen auch C₁- bis C₁₂-Alkoxygruppen in Betracht, welche sowohl linear als auch verzweigt sein können. Methoxy, Ethoxy, n-Propoxy, i-Propoxy, n-Butoxy, i-Butoxy, t-Butoxy, n-Decyloxy oder n-Dodecyloxy zählen zu den geeigneten Alkoxygruppen. Ferner können R¹ bis R⁴ Cₛ- bis C₇-Cycloalkyl, vor allem Cyclopentyl oder Cyclohexyl darstellen. Weiterhin sind C₆- bis C₁₈-Arylreste geeignete Reste R¹ bis R⁴, worunter Phenyl, Diphenyl oder Naphthyl bevorzugt werden. Auch ist es möglich, daß R¹ bis R⁴ C₄- bis Cₛ-Heteroaryl, insbesondere Pyridyl oder Thionyl, darstellen.

R¹ bis R⁴ können darüberhinaus jeweils ein Cᵢ- bis C₁₂-Alkyl-C₆- bis -C₁₈-Arylrest, vor allem Benzyl oder mit Alkylgruppen, bevorzugt Methyl, Ethyl oder Propylgruppen substituiertes Phenyl, sein.

Ganz besonders bevorzugt sind R¹ bis R⁴ gleich und bedeuten Wasserstoff.

Die Substituenten des cycloaliphatischen Rings, R⁵ und R^{6,} können unabhängig voneinander gleich oder verschieden sein. Sie können Wasserstoff bedeuten oder auch Halogen, bevorzugt Chlor. R⁵ und R⁶ können daneben jeweils einen C₁- bis C₁₂-Alkylrest bedeuten. Dieser kann sowohl linear als auch verzweigt sein. Als Beispiele seien Methyl, Ethyl, n-Propyl, i-Propyl, n-Butyl, i-Butyl, t-Butyl, n-Decyl oder n-Dodecyl genannt. Als Reste R⁵ und R⁶ kommen auch Ci- bis C₁₂-Alkoxygruppen in Betracht, welche sowohl linear als auch verzweigt sein können. Methoxy, Ethoxy, n-Propoxy, i-Propoxy, n-Butoxy, i-Butoxy, t-Butoxy, n-Decyloxy oder n-Dodecyloxy zählen zu den geeigneten Alkoxygruppen. Ferner können R⁵ und R⁶ Cₛ- bis C₇-Cycloalkyl, vor allem Cyclopentyl oder Cyclohexyl darstellen. Weiterhin sind C₆- bis C₁₈-Arylreste geeignete Reste R⁵ und R⁶, worunter Phenyl, Diphenyl oder Naphthyl bevorzugt werden. Auch ist es möglich, daß R⁵ und R⁶ C₄- bis C₅-Heteroaryl, insbesondere Pyridyl oder Thionyl, darstellen.

R⁵ und R⁶ können darüber hinaus jeweils ein Cᵢ- bis C₁₂-Alkyl-C₆- bis -C₁₈-Arylrest, vor allem Benzyl oder mit Alkylgruppen, bevorzugt Methyl, Ethyl oder Propylgruppen substituiertes Phenyl, sein.

Ganz besonders bevorzugt sind R⁵ und R⁶ Wasserstoff oder eine Ci- bis C₃-Alkylgruppe, vor allem Methyl. Insbesondere hat mindestens ein Kohlenstoffatom im cycloaliphatischen Ring zwei gleiche Alkylgruppen als Reste R⁵ und R⁶.

Die Variable m ist erfindungsgemäß eine ganze Zahl von 4 bis 7, bevorzugt 4 oder 5.

Beispiele geeigneter Diamine bi sind im folgenden aufgeführt: 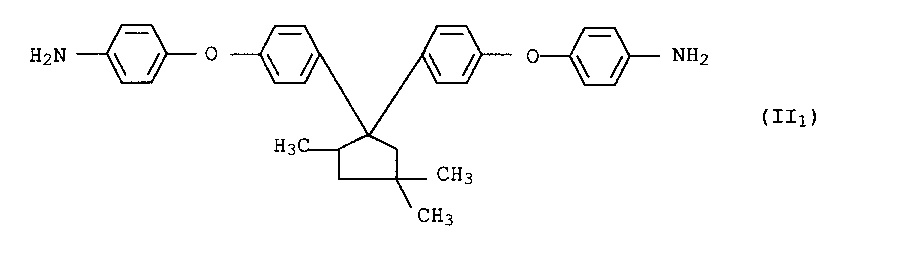 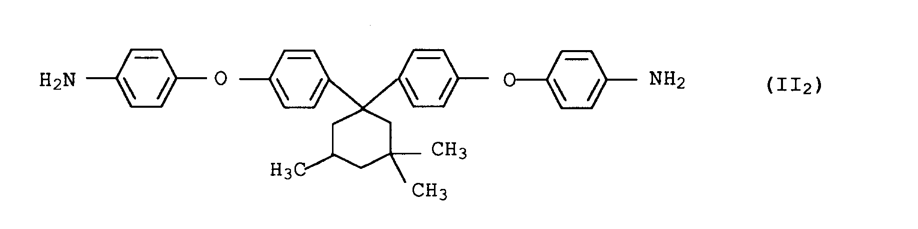 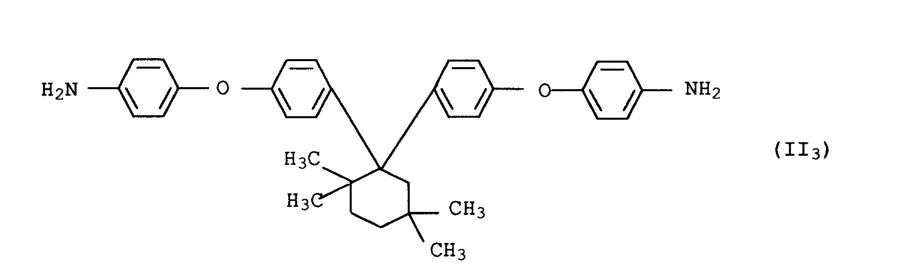 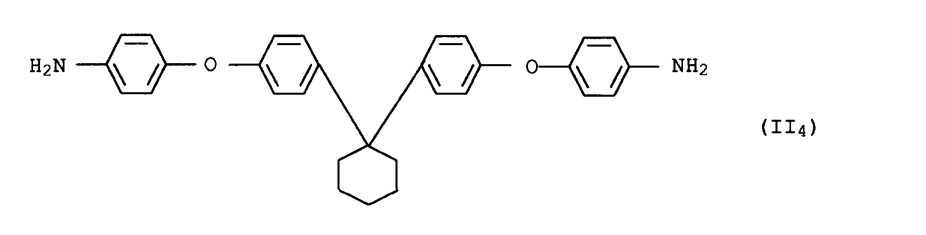 Ganz besonders bevorzugtes Diamin b₁ ist 1,1-Bis[4-(4-aminophenoxy)phenyl]-3,3,5-trimethylcyclohexan (112

Es können auch Mischungen unterschiedlicher Diamine b₁ verwendet werden. Ein Beispiel für eine geeignete Mischung ist: Diamin 11₂ mit Diamin II₄.

Die Dianhydride b₁ sind an sich bekannt. Ebenso sind Verfahren zu deren Herstellung bekannt. An dieser Stelle sei auf die eingangs erwähnten Patentanmeldungen verwiesen.

Als Diamine b₂ kommen erfindungsgemäß solche der allgemeinen Formel III 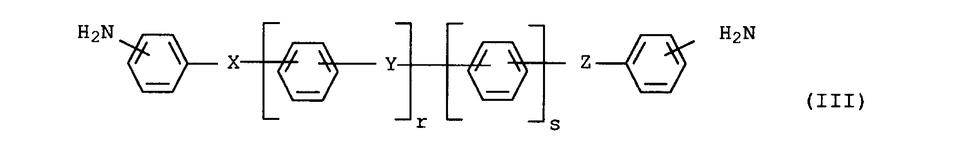 in Betracht. Darin können X, Y und Z unabhängig voneinander gleich oder verschieden sein. Sie können eine chemische Bindung bedeuten oder ausgewählt sein aus der Gruppe -O-, -CO-, -S-, -S0₂-, -C(CH₃)₂-, -C(CF₃)₂- und -Si(CH₃)₂-. Bevorzugt stellen X, Y und Z eine chemische Bindung oder -O- oder -S0₂- dar. Zu den bevorzugten Diaminen b₂ zählen 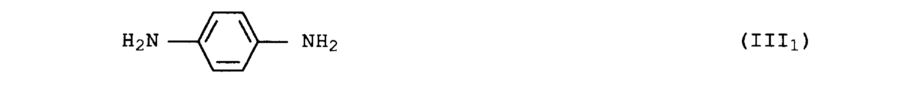 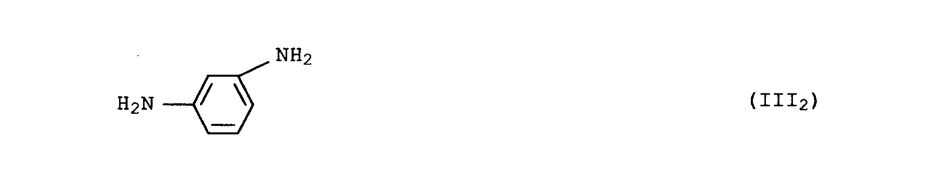 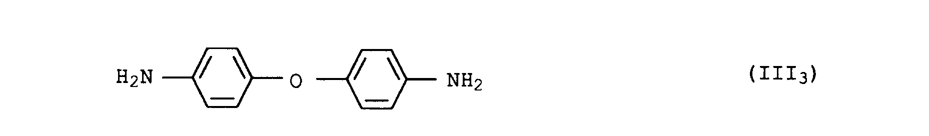 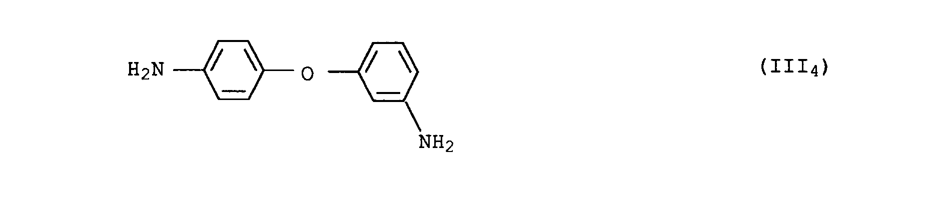 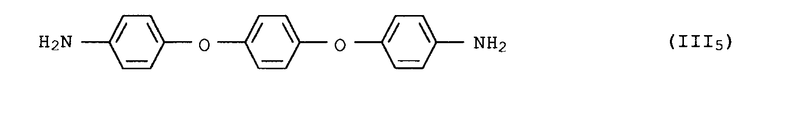 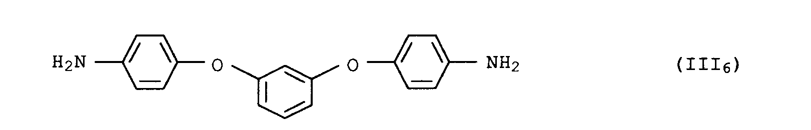 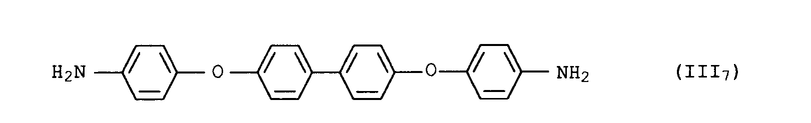 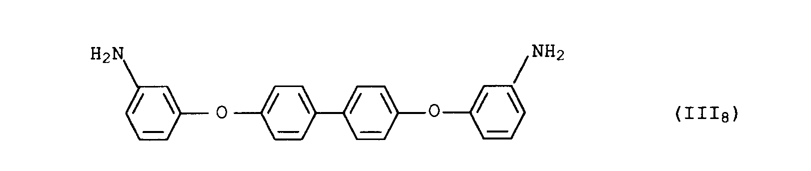 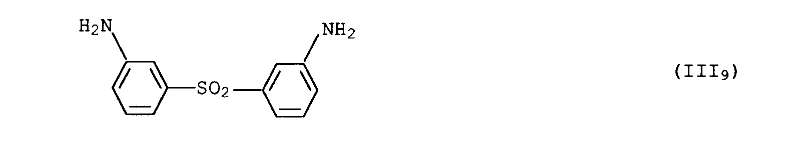 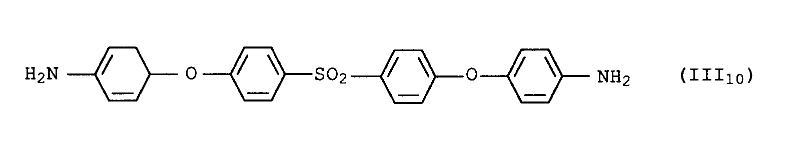 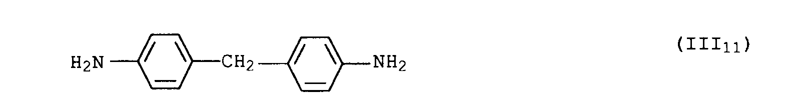 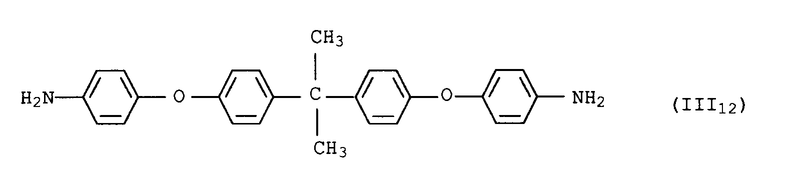 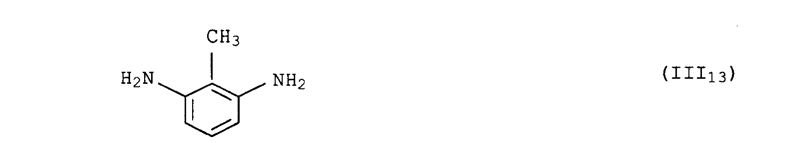 Darunter wird 4,4'-Bis(p-aminophenoxy)diphenylsulfon (III₁₀) besonders bevorzugt.

Derartige Diamine sind an sich bekannt oder können nach bekannten Methoden hergestellt werden.

Die erfindungsgemäßen Polyimide weisen in der Regel reduzierte Viskositäten im Bereich von 20 bis 200 ml/g auf. Vorzugsweise liegen die reduzierten Viskositäten im Bereich von 30 bis 130 ml/g. Dabei werden die reduzierten Viskositäten in N-Methylpyrrolidon bei einer Konzentration von 0,5 g/100 ml gemessen. Die erfindungsgemäßen Polyimide fallen im allgemeinen als kristalline Substanzen an. In der Regel lassen sie sich jedoch nicht rekristallisieren. Die Schmelzpunkte und Glasübergangstemperaturen der erfindungsgemäßen Polyimide werden mittels DSC bestimmt. Dazu werden die Polyimide mit einer Heizrate von 20_{°}C/min aufgeheizt. Im allgemeinen liegen die Schmelzpunkte im Bereich von 250 bis 500, inbesondere von 280 bis 450 °C. Die Glasübergangstemperaturen liegen im allgemeinen im Bereich von 200 bis 400, insbesondere von 220 bis 380 _{°} C.

Um gute mechanische Eigenschaften zu erzielen, ist es vorteilhaft, wenn der Zahlenmittelwert des Molekulargewichtes Mₙ der erfindungsgemäßen Polyimide mindestens 8000 g/mol beträgt. Für viele Anwendungszwecke kann Mₙ im Bereich von 15 000 bis 20 000 g/mol liegen; Molekulargewichte Mₙ von mehr als 30 000 g/mol sind meist nicht erforderlich.

Die Herstellung der Polyimide erfolgt erfindungsgemäß durch Umsetzen der Dianhydridkomponente (A) mit der Diaminkomponente (B). Dabei ist A jeweils eine Mischung aus den Dianhydriden a₁ und a₂, wenn B nur aus den Diaminen bi besteht und B ist jeweils eine Mischung aus bi und b₂, wenn A nur aus der Dianhydridkomponente a₁ besteht. Die erfindungsgemäßen Polyimide umfassen selbstverständlich auch solche, die aus A und B erhältlich sind, wobei A eine Mischung aus a₁ und a₂ ist und B eine Mischung aus bi und b₂ ist. Im Verlauf dieser Reaktion werden vermutlich zunächst die Anhydridringe in die entsprechenden Amid-Carbonsäurefunktionen umgewandelt. Dieses Polyamidcarbonsäure-Präpolymere cyclisiert unter Abspaltung von Wasser anschließend zum entsprechenden Polyimid wie im folgenden schematisch dargestellt ist: 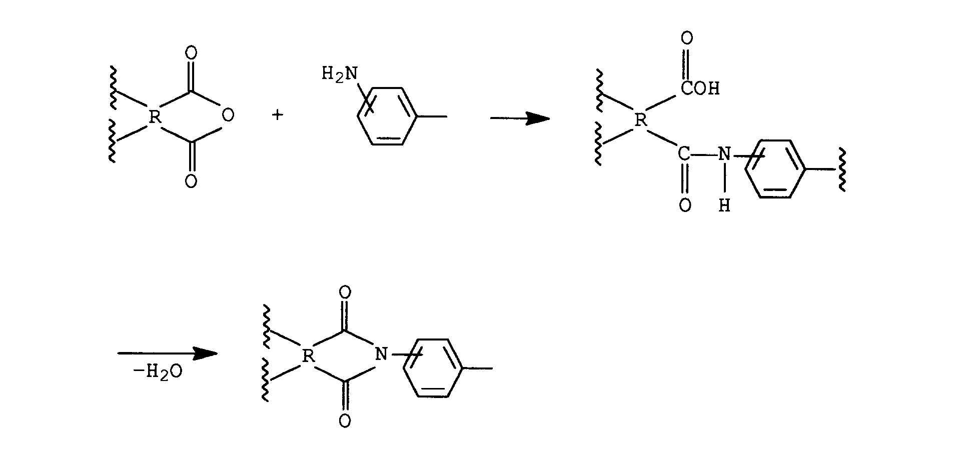 Zu Beginn oder während der Reaktion, aber auch nachdem der Molekulargewichtsaufbau erfolgt ist, können monofunktionelle Verbindungen zugegeben werden. Hierdurch lassen sich die Molekulargewichte der Polyimide und die Fließeigenschaften sowie die Stabilität ihrer Schmelzen steuern. Geeignete monofunktionelle Verbindungen sind aromatische Anhydride wie Phthalsäureanhydrid und aromatische Amine, z.B. Anilin.

Die Wasserabspaltung wird in einem Lösungsmittel oder einem Lösungsmittelgemisch vorgenommen. Als Lösungsmittel werden bevorzugt dipolar aprotische Lösungsmittel wie N,N-Dimethylformamid, N,N-Dimethylacetamid, N-Methylpyrrolidon, Dimethylsulfoxid, Diphenylsulfon, Sulfolan, y-Butyrolacton oder N-Methylcaprolactam verwendet. Besonders bevorzugt wird N-Methylpyrrolidon. Oft ist es zweckmäßig ein oder mehrere Cosolventien mitzuverwenden, die mit Wasser ein azeotropes Gemisch bilden, das es erlaubt, das gebildete Reaktionswasser durch azeotrope Destillation zu entfernen. Zu den geeigneten Cosolventien zählen beispielsweise Toluol, Mesitylen oder Dichlorbenzol.

Je nach Reaktivität der Diaminkomponente erfolgt die Wasserabspaltung bei erhöhter Temperatur, bevorzugt unter Mitverwendung eines Cosolvens, oder bei niedrigerer Temperatur in Gegenwart eines Katalysators. Ein Maß für die Reaktivität der Diaminkomponente ist deren Basizitätskonstante, ausgedrückt als pKa-Wert (siehe z.B. Bessonov et al.: "Polyimides - Thermally Stable Polymers", Consultants Bureau, New York 1987, 20 ff). Im allgemeinen wird für Diamine mit einem pKa-Wert größer 4,5 das katalytische, sonst das rein thermische Verfahren bevorzugt.

Die Wasserabspaltung in Abwesenheit eines Katalysators beginnt meist bei 20 °C und verläuft im allgemeinen erst ab 80 °C mit merklicher Geschwindigkeit. Temperaturen von mehr als 190°C sind in der Regel dann nicht erforderlich, wenn ein Cosolvens mitverwendet wird. In Gegenwart eines Katalysators cyclisiert das Polyamidcarbonsäure-Präpolymere in der Regel bereits unterhalb 100°C, meist sogar schon bei Temperaturen von weniger als 70 °C, mit erhöhter Geschwindigkeit.

Als Katalysatoren werden im allgemeinen Mischungen aus tertiären Aminen und Anhydriden niederer Fettsäuren eingesetzt. Als tertiäre Amine kommen aliphatische Amine wie Tributylamin, Triethylamin oder Triisopropylamin oder aromatische Amine wie Pyridin, Dimethylaminopyridin, Lutidin, Chinolin oder Isochinolin in Betracht. Beispiele geeigneter Anhydride sind Essigsäureanhydrid, Hexansäureanhydrid, Caprylsäureanhydrid und Laurylsäureanhydrid. Bevorzugt wird Essigsäureanhydrid eingesetzt.

Die erfindungsgemäßen Polyimide zeichnen sich durch ihre gute Löslichkeit in den genannten Lösungsmitteln aus. Im allgemeinen sind sie auch in Konzentrationen von über 10 Gew.-% vollständig in diesen löslich. In der Regel weisen sie reduzierte Viskositäten ab 20, bevorzugt ab 30 ml/g, gemessen in N-Methylpyrrolidon bei einer Konzentration von 0,5 g/100 ml, auf. Meistens weisen die erfindungsgemäßen Polyimide keine reduzierte Viskositäten oberhalb eines Wertes von 200 ml/g, gemessen in N-Methylpyrrolidon bei einer Konzentration von 0,5 g/100 ml auf. Bevorzugt werden Polyimide mit reduzierten Viskositäten von 130 ml/g oder weniger, gemessen an N-Methylpyrrolidon bei einer Konzentration von 0,5 g/100 ml.

Den erfindungsgemäßen Polyimiden können übliche Zusatzstoffe in bis zu 50 Gew.-%, vorzugsweise 5 bis 30 Gew.-%, bezogen auf die Mischung zugegeben werden. Zu den Zusatzstoffen zählen faser- oder teilchenförmige Füll- oder Verstärkungsmittel wie Kohlenstoff- oder Glasfasern, Glaskugeln und Calciumsilikate wie Wollastonit und Kaolin.

Weitere Additive, die den erfindungsgemäßen Polyimiden zugegeben werden können sind beispielsweise Stabilisatoren, Fließverbesserer und Farbstoffe. Diese können im allgemeinen in Mengen von 0,01 bis 10 Gew.-% in den erfindungsgemäßen Polyimiden enthalten sein.

Die erfindungsgemäßen Polyimide sind amorph und können nach an sich bekannten Verfahren thermoplastisch zu Formkörpern, Fasern oder flächigen Gebilden verarbeitet werden. Sie zeichnen sich durch eine erhöhte Wärmeformbeständigkeit und eine sehr gute Schmelzestabilität aus. Es wird bevorzugt die Polyimide aus der Schmelze heraus zu verarbeiten. Es ist aber zum Beispiel auch möglich, die Polyimide vor dem Verarbeiten in einem Dispergiermittel zu dispergieren. Die Verarbeitung kann beispielsweise durch Verpressen, Extrudieren, Spritzgießen oder Tiefziehen erfolgen. Man kann aber auch eine Schmelze oder Dispersion auf Verstärkungsfasern oder -matten aufbringen und das erhaltene Halbzeug, gewünschtenfalls nach Entfernen des Dispergiermittels, verformen.

### Beispiele

Komponenten:
a₁.₁: 4,4'-Oxydiphthalsäureanhydrid (l₁)
b₁.₁: 1,1-Bis[4-(aminophenoxy)phenyl]-3,3,5-trimethylcyclohexan (11₂)
b₂.₁: 4,4'-Bis(4-aminophenoxy)diphenylsulfon (III₁₀)
b₂.₂: 2,2'-Bis(4-aminophenoxyphenyl)propan (III₁₂)

### Beispiel 1

### Polyimid aus a_{1.1} und einer Mischung aus 90 mol-% b_{1.1} und 10 mol-% b₂.₁

4,30 g (23 mmol) b_{1.1} und 1,08 g (2,5 mmol) b₂.₁ wurden unter Stickstoff in 100 ml N-Methylpyrrolidon gelöst. Anschließend wurden 0,15 g (1,0 mmol) Phthalsäureanhydrid und 7,76 g (25,0 mmol) a_{1.1} zugegeben, wobei die Reaktionsmischung gekühlt wurde. Nachdem die Reaktionsmischung 24 Stunden bei Raumtemperatur gerührt worden war, wurde die Reaktionsmischung durch Zugabe von N-Methylpyrrolidon verdünnt und mit 0,03 g (0,25 mmol) 4-Dimethylaminopyridin sowie 12 ml Essigsäureanhydrid versetzt. Anschließend wurde die Reaktionsmischung auf 60 °C erwärmt und bei dieser Temperatur 5 Stunden gerührt. Das Polyimid wurde durch Ausfällen in Methanol erhalten. Das mit Methanol gereinigte und getrocknete Produkt wies eine reduzierte Viskosität von 99 ml/g (gemessen in 0,5 gew.-%iger Lösung in N-Methylpyrrolidon bei 25 °C) und eine Glasübergangstemperatur Tg von 259 °C (gemessen bei einer Heizrate von 20 K/min) auf. Die Schmelzestabilität des erhaltenen Polyimids wurde bei 400°C und einer Schergeschwindigkeit von 10² s⁻¹ bestimmt. Bei unmittelbarer Bestimmung betrug die Schmelzeviskosität 2400 Pas und nach 15 Minuten 2000 Pas.

### Beispiel 2

Der Versuch wurde wie unter Beispiel 1 beschrieben ausgeführt, jedoch wurden b_{1.1} und b₂.₁ im Molverhältnis 70/30 eingesetzt.

Die reduzierte Viskosität des erhaltenen Polyimids war 86 ml/g (gemessen in 0,5 gew.-%iger Lösung in N-Methylpyrrolidon bei 25 °C) und die Glasübergangstemperatur Tg lag bei 258 °C (gemessen bei einer Heizrate von 20 K/min). Die Schmelzestabilität wurde wie unter 1 beschrieben ermittelt. Die Schmelzeviskositäten waren 1800 Pas bei unmittelbarer Bestimmung und 1200 Pas (nach 15 Minuten).

### Beispiel 3

Der Versuch wurde wie unter Beispiel 1 beschreiben ausgeführt, jedoch wurden b_{1.1} und b₂.₂ im Molverhältnis 90/10 eingesetzt.

Die reduzierte Viskosität des erhaltenen Polyimids war 96 ml/g (gemessen in 0,5 gew.-%iger Lösung in N-Methylpyrrolidon bei 25 °C) und die Glasübergangstemperatur Tg lag bei 266 °C (gemessen bei einer Heizrate von 20 K/min). Die Schmelzestabilität wurde wie unter 1 beschrieben ermittelt. Die Schmelzeviskositäten waren 2200 Pas bei unmittelbarer Bestimmung und 2000 Pas (nach 15 Minuten).

## Patentansprüche

1. Polyimide, erhältlich durch Umsetzen
A) einer Dianhydridkomponente aus
aᵢ) 50 bis 100 Mol-% mindestens eines Dianhydrids der allgemeinen Formel I 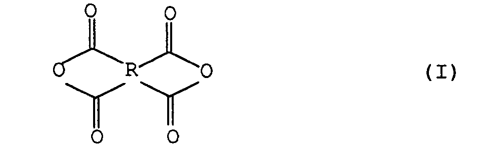 worin R ein tetravalenter aromatischer oder heteroaromatischer Rest, ausgenommen 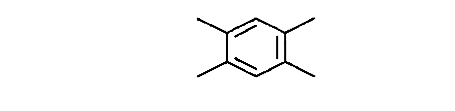 ist und
a₂) 0 bis 50 Mol-% Pyromellitsäuredianhydrid, mit
B) einer Diaminkomponente aus
b₁) 50 bis 100 Mol-% mindestens eines Diamins der allgemeinen Formel II 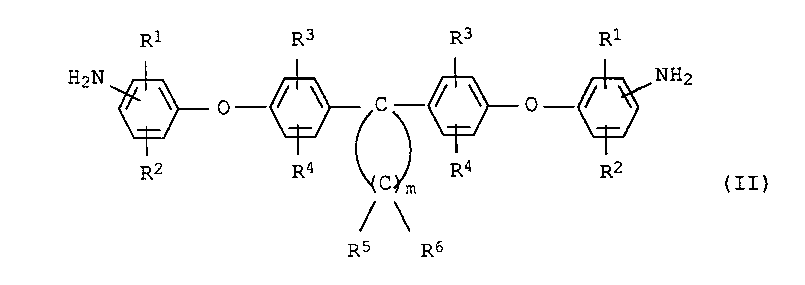 worin R¹ bis R⁴ unabhängig voneinander gleich oder verschieden sind und Wasserstoff, Halogen, Ci- bis C₁₂-Alkyl, Ci- bis C₁₂-Alkoxy, Cs- bis C₇-Cycloalkyl, C₆- bis C₁₈-Aryl, C₄- bis Cs-Heteroaryl oder C₁- bis C₁₂-Alkyl-C₆- bis C₁₈-Aryl bedeuten,
R⁵ und R⁶ unabhängig voneinander gleich oder verschieden sind und für jedes C-Atom individuell wählbar, Wasserstoff, Cᵢ- bis C₁₂-Alkyl, Cᵢ- bis C₁₂-Alkoxy, Cₛ- bis C₇-Cycloalkyl, C₆- bis C₁₈- Aryl, C₄- bis Cs-Heteroaryl oder C₁- bis C₁₂-Alkyl-C₆- bis C₁₈-Aryl bedeuten,
m eine ganze Zahl von 4 bis 7 bedeutet,
b₂) 0 bis 50 Mol-% mindestens eines Diamins der allgemeinen Formel III 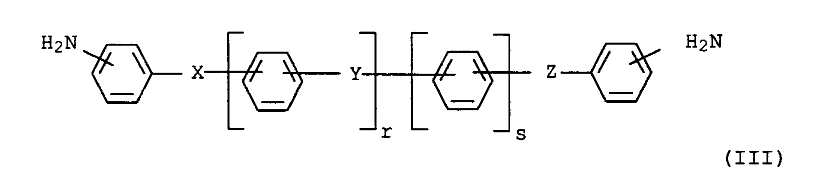 worin X, Y und Z unabhängig voneinander gleich oder verschieden sind und eine chemische Bindung bedeuten oder ausgewählt sind aus der Gruppe -O-, -CO-, -S-, S0₂-, -C(CH₃)₂-, -C(CF₃)-₂- und -Si(CH₃)₂- und r und s unabhängig voneinander gleich oder verschieden sind und den Wert 0 oder 1 haben
mit der Maßgabe, daß die Komponente A eine Mischung aus a₁ und a₂ ist, wenn die Komponente B nur aus b₁ besteht und die Komponente B eine Mischung aus b₁ und b₂ ist, wenn die Komponente A nur aus a₁ besteht.

2. Polyimide nach Anspruch 1, erhältlich durch Umsetzen
A) einer Dianhydridkomponente aus
ai) 65 bis 95 Mol-% mindestens eines Dianhydrids der allgemeinen Formel I und
a₂) 5 bis 35 Mol-% Pyromellitsäuredianhydrid und
einer Diaminkomponente B.

3. Polyimide nach einem der Ansprüche 1 oder 2, erhältlich durch Umsetzen einer Dianhydridkomponente A mit
B) einer Diaminkomponente aus
b₁) 65 bis 95 Mol-% mindestens eines Diamins der allgemeinen Formel II und
b₂) 5 bis 35 Mol-% mindestens eines Diamins der allgemeinen Formel III.

4. Polyimide nach einem der Ansprüche 1 bis 3, in denen die Dianhydride der allgemeinen Formel I, worin R ausgewählt ist aus den Resten 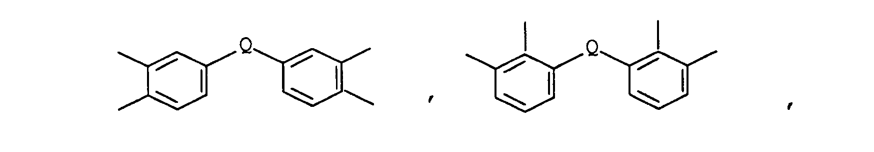 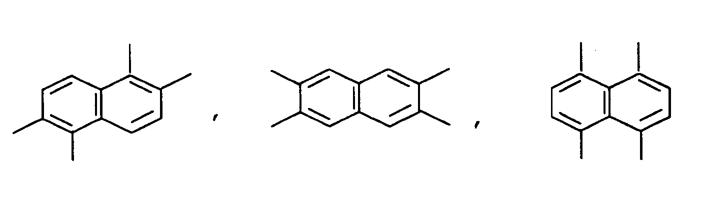 und 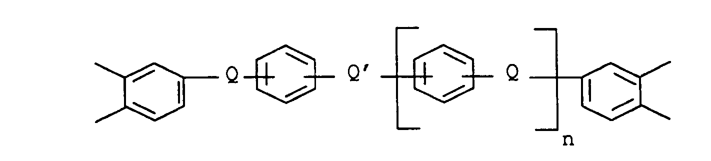 worin Q und Q' unabhängig voneinander gleich oder verschieden sind und eine direkte Bindung oder einen Rest ausgewählt aus der Gruppe -O-, -CO-, -S-, -S0₂-, -C(CH₃)₂-, -C(CF₃)₂- und -Si(CH₃)₂- bedeuten und n den Wert 0 oder 1 annehmen kann.

5. Polyimide nach einem der Ansprüche 1 bis 4, in denen das Diamin b₁ 1,1-Bis[4-(4-aminophenoxy)-phenyl]-3,3,5-trimethylcyclohexan ist.

6. Polyimide nach einem der Ansprüche 1 bis 5, in denen das Diamin b₂ 4,4'-Bis(p-aminophenoxy)-diphenylsulfon ist.

7. Verwendung der Polymide gemäß einem der Ansprüche 1 bis 6 zur Herstellung von Formkörpern, Fasern oder Folien.

8. Formkörper, Fasern oder Folien, erhältlich aus Polyimiden gemäß einem der Ansprüche 1 bis 6.
